# EUROPÄISCHE PATENTANMELDUNG

(11) **EP 3 033 937 A1**
(43) Veröffentlichungstag der Anmeldung: **22.06.2016**
(21) Anmeldenummer: 15198761.7
(22) Anmeldetag: 09.12.2015
(51) Int. Cl.: A01D 69/08, A01B 73/02, F16D 3/18

(54) **KUPPLUNG UND LANDWIRTSCHAFTLICHES ARBEITSGERÄT MIT EINER KUPPLUNG**

(30) Priorität: 18.12.2014 DE 102014119014
(71) Anmelder: CLAAS Saulgau GmbH, 88348 Bad Saulgau (DE)
(72) Erfinder: Geng, Manfred, 88348 Bad Saulgau (DE)

(57) **Zusammenfassung**

Kupplung (10) und landwirtschaftliches Arbeitsgerät mit einer Kupplung, wobei die Kupplung zur permanenten Antriebsverbindung zweier Triebwellen (4, 7) dient, welche mit jeweiligen Längsenden aneinander angrenzen und welche an diesen Längsenden um eine Schwenkachse (A1) in einem vorbestimmten Schwenkbereich gegeneinander verschwenkbar sind, und eine erste Kupplungshälfte (20) zur drehfesten Anordnung am Längsende einer der Triebwellen und eine zweite Kupplungshälfte (30) zur drehfesten Anordnung am Längsende der anderen der Triebwellen aufweist. Die Kupplungshälften sind derart eingerichtet, dass im gesamten Schwenkbereich umfängliche Eingriffselemente der ersten Kupplungshälfte drehmomentübertragungsfähig in jeweilige Zwischenräume zwischen umfänglichen Eingriffselementen der zweiten Kupplungshälfte eingreifen können. Zur Belastungsreduzierung und Verlängerung der Einsatzfähigkeitsdauer sind die Kupplungshälften jeweils mit einem Zahnrad gebildet, wobei Zähne dieser als Eingriffselemente so geformt sind, dass sie sowohl einen stirnseitigen als auch einen planseitigen Zahneingriff ermöglichen.

## Beschreibung

Die Erfindung betrifft eine Kupplung gemäß dem Oberbegriff des Anspruchs 1 sowie ein mit einer Kupplung versehenes landwirtschaftliches Arbeitsgerät gemäß dem Oberbegriff des Anspruchs 7.

Ein wie eingangsgenanntes landwirtschaftliches Arbeitsgerät mit einer wie eingangsgenannten Kupplung ist z.B. aus EP 0 965 262 B1 bekannt. Bei dem dort beschriebenen landwirtschaftlichen Arbeitsgerät handelt es sich um eine Heuwerbungsmaschine, insbesondere um einen Rotationsheuwender.

Das Arbeitsgerät weist zwei Ausleger auf, welche jeweils drei längliche Auslegersegmente haben und welche an einer Tragstruktur zur heckseitigen Aufsattelung bzw. Dreipunkthalterung an einer selbstfahrenden landwirtschaftlichen Arbeitsmaschine wie einem Traktor angebracht sind. Benachbarte Paare von Auslegersegmenten sind bei jedem Ausleger jeweils über ein Schwenkgelenk miteinander verbunden. Entlang der so verbundenen Auslegersegmente erstreckt sich jeweils längs eine Triebwelle, so dass die beiden Triebwellen mit jeweiligen Längsenden dieser am Schwenkgelenk aneinander angrenzen.

Die per Schwenkgelenk verbundenen Auslegersegmente sind um eine durch das Schwenkgelenk definierte Schwenkachse gegeneinander verschwenkbar in einem vorbestimmten Schwenkbereich von einer Arbeitsstellung, in welcher die beiden Triebwellen koaxial aneinandergereiht sind, bis zu einer Transportstellung, in welcher jeweilige Rotationsachsen der beiden Triebwellen auseinanderfallen.

Jeder Ausleger umfasst für jedes Paar von per Schwenkgelenk verbundenen Auslegersegmenten eine Kupplung mit einer ersten Kupplungshälfte, welche drehfest am schwenkgelenkseitigen Längsende einer Triebwelle der beiden Triebwellen angeordnet ist, und einer zweiten Kupplungshälfte, welche drehfest am schwenkgelenkseitigen Längsende der anderen Triebwelle der beiden Triebwellen angeordnet ist. Dabei sind die beiden Kupplungshälften jeweils so eingerichtet, dass im gesamten Schwenkbereich umfängliche Eingriffselemente der einen Kupplungshälfte drehmomentübertragungsfähig in jeweilige Zwischenräume zwischen umfänglichen Eingriffselementen der anderen Kupplungshälfte eingreifen.

Genauer verfügt die eine Kupplungshälfte über fingerförmige Eingriffselemente, deren Achsen in Richtung der Triebwellen verlaufen, und ist die andere Kupplungshälfte sternförmig ausgeführt, wobei die Sternform bildende Eingriffselemente radial vorstehen und beim Zusammenwirken beider Kupplungshälften Zwischenräume zwischen den fingerförmigen Eingriffselementen derart durchsetzen, dass beim Verschwenken eines der Auslegersegmente bzw. einer der Triebwellen die Eingriffselemente beider Kupplungshälften weiterhin drehmomentübertragungsfähig zusammenarbeiten.

Durch die fingerförmige Ausgestaltung der Eingriffselemente der einen Kupplungshälfte können diese Eingriffselemente erhöhter Belastung unterliegen, was die Einsatzfähigkeitsdauer der Kupplung und somit auch des landwirtschaftlichen Arbeitsgeräts reduzieren kann.

Der Erfindung liegt die Aufgabe zugrunde, eine Kupplung gemäß dem Oberbegriff des Anspruchs 1 sowie ein landwirtschaftliches Arbeitsgerät gemäß dem Oberbegriff des Anspruchs 7 so fortzubilden, dass eine verlängerte Einsatzfähigkeitsdauer gewährleistet wird.

Dies wird für die Kupplung mit den Merkmalen im kennzeichnenden Teil des Anspruchs 1 und für das landwirtschaftliche Arbeitsgerät mit den Merkmalen im kennzeichnenden Teil des Anspruchs 7 erreicht. Weiterbildungen der Erfindung sind in den jeweiligen abhängigen Ansprüchen definiert.

Durch die Erfindung wird eine Kupplung breitgestellt zur permanenten Antriebsverbindung zweier Triebwellen, welche mit jeweiligen Längsenden aneinander angrenzen und welche an diesen Längsenden um eine Schwenkachse in einem vorbestimmten Schwenkbereich gegeneinander verschwenkbar sind. Die Triebwellen lassen sich mittels einer erfindungsgemäßen Kupplung vorteilhaft um mehr als etwa 180 Winkelgrade gegeneinander verschwenken.
Die erfindungsgemäße Kupplung weist eine erste Kupplungshälfte und eine zweite Kupplungshälfte auf. Die erste Kupplungshälfte ist vorgesehen und eingerichtet zur drehfesten Anordnung am Längsende einer Triebwelle der beiden Triebwellen. Die zweite Kupplungshälfte ist vorgesehen und eingerichtet zur drehfesten Anordnung am Längsende der anderen Triebwelle der beiden Triebwellen.

Die ersten und zweiten Kupplungshälften sind jeweils so eingerichtet, dass im gesamten Schwenkbereich umfängliche Eingriffselemente der ersten Kupplungshälfte drehmomentübertragungsfähig in jeweilige Zwischenräume zwischen umfänglichen Eingriffselementen der zweiten Kupplungshälfte eingreifen können.

Die erfindungsgemäße Kupplung zeichnet sich dadurch aus, dass die ersten und zweiten Kupplungshälften jeweils mit einem Zahnrad gebildet sind, wobei jeweilige Zähne der Zahnräder als Eingriffselemente so geformt sind, dass sie sowohl einen stirnseitigen als auch einen planseitigen Zahneingriff der Zahnräder der ersten und zweiten Kupplungshälften ermöglichen.

Durch die Ausgestaltung der ersten und zweiten Kupplungshälften mit jeweiligen Zahnrädern, die sowohl einen stirnseitigen als auch einen planseitigen Zahneingriff der Zahnräder ermöglichen, um im gesamten Schwenkbereich den drehmomentübertragungsfähigen Eingriff der Eingriffselemente der ersten und zweiten Kupplungshälften zu realisieren, wird die Belastung der Eingriffselemente reduziert, was die Einsatzfähigkeitsdauer der Kupplung verlängert.

Die Zahnräder können z.B. durch spanende Bearbeitung kostengünstig und einfach hergestellt werden. Um Kerbspannungen an den Zähnen der Zahnräder zu reduzieren, können vorteilhaft Schmiederadien an den Zahnrädern vorgesehen werden. Dadurch wird die Belastung der Eingriffselemente weiter reduziert, was die Einsatzfähigkeitsdauer der Kupplung noch mehr verlängert.

Gemäß einer Ausführungsform der erfindungsgemäßen Kupplung weisen bei den ersten und zweiten Kupplungshälften die Zähne der Zahnräder jeweils einen stirnseitigen Zahnabschnitt, der von einer umfänglichen Stirnseite des Zahnrades radial vorsteht, und einen planseitigen Zahnabschnitt auf, der von einer axialgerichteten Planseite des Zahnrades axial vorsteht. Bevorzugt ist der stirnseitige Zahnabschnitt evolventenförmig ausgebildet und ist der planseitige Zahnabschnitt keilförmig ausgebildet. Außerdem geht bevorzugt der planseitige Zahnabschnitt unterbrechungsfrei bogenförmig in den stirnseitigen Zahnabschnitt über.

Allgemein ausgedrückt ist gemäß einer Ausführungsform der Erfindung an jeder der beiden Kupplungshälften eine Hirth-Verzahnung als planseitige Verzahnung mit einer stirnseitigen Verzahnung bevorzugt in Evolventenform kombiniert, wobei die planseitige Verzahnung und die stirnseitige Verzahnung unterbrechungsfrei und bevorzugt bogenförmig ineinander übergehen.

Durch den unterbrechungsfreien Übergang der planseitigen Zahnabschnitte bzw. Verzahnung in die stirnseitigen Zahnabschnitte bzw. Verzahnung der Zahnräder kann beim gegeneinander Verschwenken der Kupplungshälften (wenn an den Triebwellen installiert) ein allmählicher Übergang von einer ersten Eingriffssituation, in welcher die jeweiligen planseitigen Zahnabschnitte der Zahnräder miteinander in drehmomentübertragungsfähigem Zahneingriff stehen, in eine zweite Eingriffssituation, in welcher die jeweiligen stirnseitigen Zahnabschnitte der Zahnräder miteinander in drehmomentübertragungsfähigem Zahneingriff stehen, und umgekehrt realisiert werden. Damit kann im gesamten Schwenkbereich eine permanente rotative Antriebsverbindung der beiden Triebwellen über die Kupplung gewährleistet werden.

Gemäß einer weiteren Ausführungsform der erfindungsgemäßen Kupplung vermindert sich bei mindestens einer und bevorzugt bei beiden von den ersten und zweiten Kupplungshälften ein axiales Vorstehmaß des planseitigen Zahnabschnitts jedes Zahns von einem radial äußersten Ende zu einem radial innersten Ende des planseitigen Zahnabschnitts hin, so dass die planseitigen Zahnabschnitte eine zur Planseite hin konisch zulaufende Verzahnung bilden.

Mit anderen Worten definieren die Zahnräder der ersten und zweiten Kupplungshälften im Bereich ihrer planseitigen Verzahnung im Längsschnitt gesehen jeweils eine trichterförmige Kontur, wodurch der allmähliche Übergang von der ersten Eingriffssituation in die zweite Eingriffssituation und umgekehrt bzw. die Scharnierbarkeit der Verzahnungen vorteilhaft unterstützt wird.

Gemäß noch einer Ausführungsform der erfindungsgemäßen Kupplung geht der planseitige Zahnabschnitt in einem Bogen, der sich vom radial äußersten Ende des planseitigen Zahnabschnitts bis zu einem radial innersten Ende des zugehörigen stirnseitigen Zahnabschnitts erstreckt, unterbrechungsfrei in den stirnseitigen Zahnabschnitt über. Auch durch diese Konfiguration der Verzahnungen der beiden Kupplungshälften wird der allmähliche Übergang von der ersten Eingriffssituation in die zweite Eingriffssituation und umgekehrt bzw. die Scharnierbarkeit der Verzahnungen vorteilhaft unterstützt.

Gemäß noch einer weiteren Ausführungsform der erfindungsgemäßen Kupplung sind die Zahnräder der ersten und zweiten Kupplungshälften zueinander identisch ausgebildet. Dies vermindert vorteilhaft die Teilevielfalt und senkt somit den Herstellungs- und den Wartungsaufwand für die Kupplung.

Durch die Erfindung wird auch ein landwirtschaftliches Arbeitsgerät bereitgestellt, welches mindestens einen Ausleger und eine am Ausleger vorgesehene Kupplung aufweist. Bevorzugt ist das landwirtschaftliche Arbeitsgerät als Heuwerbungsmaschine und insbesondere als Rotationsheuwender ausgebildet.

Der mindestens eine Ausleger weist mindestens zwei längliche Auslegersegmente auf, die über ein Schwenkgelenk miteinander verbunden sind und entlang derer sich jeweils längs eine Triebwelle erstreckt, so dass die beiden Triebwellen mit jeweiligen Längsenden dieser am Schwenkgelenk aneinander angrenzen.

Bevorzugt ist an jedem der Auslegersegmente des Auslegers ein Arbeitsorgan wie insbesondere ein Rechkreisel vorgesehen und über ein Getriebe mit der jeweiligen Triebwelle des Auslegersegments antriebsverbunden.

Die Auslegersegmente sind um eine durch das Schwenkgelenk definierte Schwenkachse gegeneinander verschwenkbar in einem vorbestimmten Schwenkbereich von einer Arbeitsstellung, in welcher die beiden Triebwellen koaxial aneinandergereiht sind, bis zu einer Transportstellung, in welcher jeweilige Rotationsachsen der beiden Triebwellen auseinanderfallen.

Die Kupplung hat eine erste Kupplungshälfte, welche drehfest am schwenkgelenkseitigen Längsende einer Triebwelle der beiden Triebwellen angeordnet ist, und eine zweite Kupplungshälfte, welche drehfest am schwenkgelenkseitigen Längsende der anderen Triebwelle der beiden Triebwellen angeordnet ist.

Die ersten und zweiten Kupplungshälften sind jeweils so eingerichtet, dass im gesamten Schwenkbereich umfängliche Eingriffselemente der ersten Kupplungshälfte drehmomentübertragungsfähig in jeweilige Zwischenräume zwischen umfänglichen Eingriffselementen der zweiten Kupplungshälfte eingreifen.

Das erfindungsgemäße landwirtschaftliche Arbeitsgerät zeichnet sich dadurch aus, dass die ersten und zweiten Kupplungshälften jeweils mit einem Zahnrad gebildet sind, wobei jeweilige Zähne der Zahnräder als Eingriffselemente so geformt sind, dass sie sowohl einen stirnseitigen als auch einen planseitigen Zahneingriff der Zahnräder der ersten und zweiten Kupplungshälften ermöglichen.

Durch die Ausgestaltung der ersten und zweiten Kupplungshälften mit jeweiligen Zahnrädern, die sowohl einen stirnseitigen als auch einen planseitigen Zahneingriff der Zahnräder ermöglichen, um im gesamten Schwenkbereich den drehmomentübertragungsfähigen Eingriff der Eingriffselemente der ersten und zweiten Kupplungshälften zu realisieren, wird die Belastung der Eingriffselemente reduziert, was die Einsatzfähigkeitsdauer der Kupplung und damit auch jene des landwirtschaftlichen Arbeitsgeräts verlängert.

Ein erfindungsgemäßes landwirtschaftliches Arbeitsgerät ist besonders vorteilhaft mit wenigstens einer der zuvor beschriebenen Ausführungsformen einer erfindungsgemäßen Kupplung ausgestattet.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren detaillierter beschrieben.
- Fig. 1: zeigt eine perspektivische Längsschnittansicht zweier in einer Arbeitsstellung befindlicher Auslegersegmente eines Auslegers eines landwirtschaftlichen Arbeitsgerätes gemäß einer Ausführungsform der Erfindung.
- Fig. 2: zeigt in perspektivischer ungeschnittener Ansicht die Auslegersegmente von Fig. 1 in einer Transportstellung.
- Fig. 3: zeigt eine perspektivische Ansicht einer in den Ausleger des landwirtschaftlichen Arbeitsgerätes von Fig. 1 integrierten Kupplung gemäß einer Ausführungsform der Erfindung.
- Fig. 4: zeigt eine andere perspektivische Ansicht der Kupplung von Fig. 3.

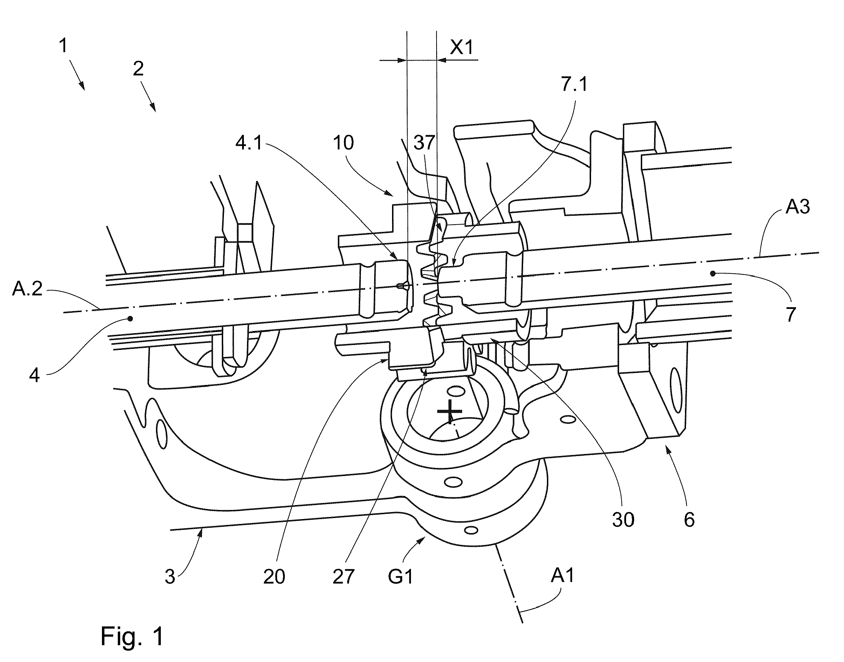

Im Folgenden werden unter Bezugnahme auf die Figuren 1 bis 4 ein landwirtschaftliches Arbeitsgerät 1 mit mindestens einem Ausleger 2 (beides nicht vollständig gezeigt) sowie eine in den Ausleger 2 integrierte Kupplung 10 gemäß Ausführungsformen der Erfindung beschrieben werden.

Gemäß einer Ausführungsform der Erfindung ist das landwirtschaftliche Arbeitsgerät 1 als Heuwerbungsmaschine und insbesondere als Rotationsheuwender ausgebildet.

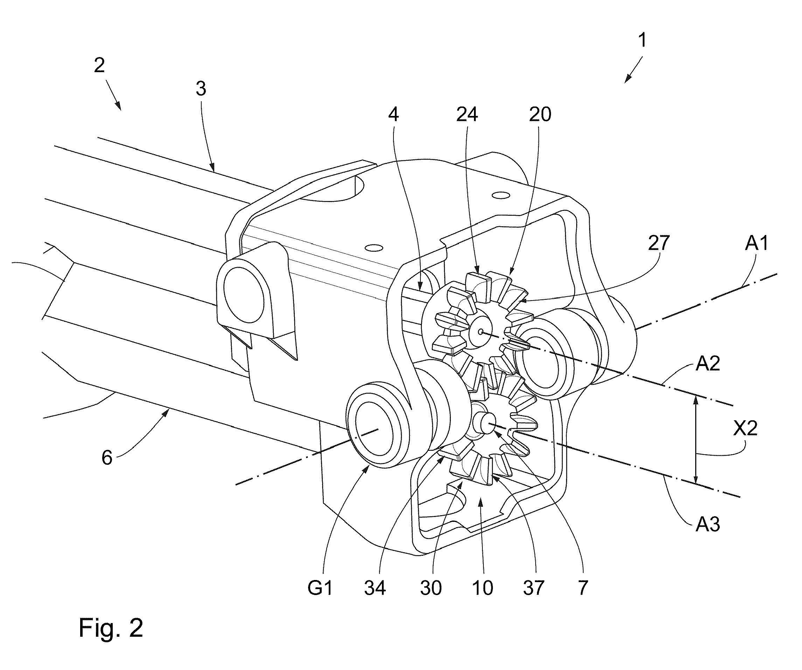

Der Ausleger 2 weist mindestens zwei längliche Auslegersegmente 3, 6 auf, die über ein Schwenkgelenk G1 miteinander verbunden sind, so dass die Auslegersegmente 3, 6 um eine durch das Schwenkgelenk G1 definierte Schwenkachse A1 gegeneinander verschwenkbar sind, wie in Fig. 1 und Fig. 2 gezeigt.

In jedem der Auslegersegmente 3, 6 ist eine Triebwelle 4 bzw. 7 um eine jeweilige Rotationsachse A2 bzw. A3 drehbar gelagert, so dass sich die Triebwelle 4, 7 längs entlang der Längserstreckung des jeweiligen Auslegersegments 3, 6 erstreckt und die beiden Triebwellen 4, 7 mit jeweiligen Längsenden 4.1, 7.1 dieser am Schwenkgelenk G1 mit einem durch die Auslegung des Schwenkgelenks G1 und der Auslegersegmente 3, 6 vorbestimmten axialen Abstand X1 voneinander aneinander angrenzen. Gemäß einer Ausführungsform der Erfindung beträgt der axiale Abstand X1 etwa 35 mm.

An jedem der Auslegersegmente 3, 6 des Auslegers 2 ist ein Arbeitsorgan (nicht gezeigt) wie insbesondere ein Rechkreisel vorgesehen und über ein Getriebe (nicht gezeigt) mit der jeweiligen Triebwelle 4, 7 des Auslegersegments 3, 6 antriebsverbunden.

Wie aus den Figuren 1 und 2 ersichtlich sind die beiden Auslegersegmente 3, 6 um die durch das Schwenkgelenk G1 definierte Schwenkachse A1 gegeneinander in einem vorbestimmten Schwenkbereich verschwenkbar, welcher sich von der in Fig. 1 gezeigten Arbeitsstellung bis zu der in Fig. 2 gezeigten Transportstellung erstreckt. Gemäß der Erfindung kann der Schwenkbereich von etwa 90 Grad bis etwa 180 Grad betragen und beträgt hier insbesondere 180 Grad.

Wie aus Fig. 1 ersichtlich, sind in der Arbeitsstellung die beiden Triebwellen 4, 7 in einer Linie längs aneinandergereiht, so dass ihre jeweiligen Rotationsachse A2, A3 in axialer Verlängerung zusammenfallen. Mit anderen Worten sind die beiden Triebwellen 4, 7 in der Arbeitsstellung koaxial aneinandergereiht.

Wie aus Fig. 2 ersichtlich, fallen in der Transportstellung die jeweiligen Rotationsachsen A2, A3 der beiden Triebwellen 4, 7 auseinander. Genauer sind gemäß der in Fig. 2 gezeigten Transportstellung die beiden Triebwellen 4, 7 mit einem durch die Auslegung des Schwenkgelenks G1 und der Auslegersegmente 3, 6 vorbestimmten radialen Abstand X2 parallel längsseits nebeneinander angeordnet. Gemäß einer Ausführungsform der Erfindung beträgt der radiale Abstand X2 etwa 70 mm bis 75 mm.

Die Kupplung 10 dient zur permanenten rotativen Antriebsverbindung der beiden Triebwellen 4, 7 und weist eine erste Kupplungshälfte 20 und eine zweite Kupplungshälfte 30 auf. Die erste Kupplungshälfte 20 ist drehfest am schwenkgelenkseitigen Längsende 4.1 der einen Triebwelle 4 angeordnet bzw. mit diesem verbunden, und die zweite Kupplungshälfte 30 ist drehfest am schwenkgelenkseitigen Längsende 7.1 der anderen Triebwelle 7 angeordnet bzw. mit diesem verbunden.

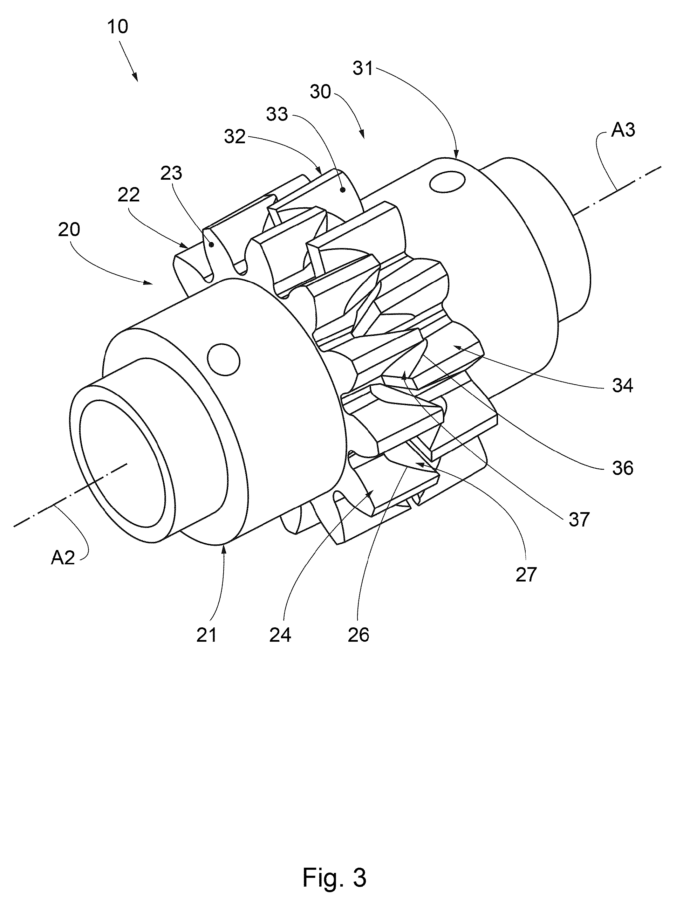

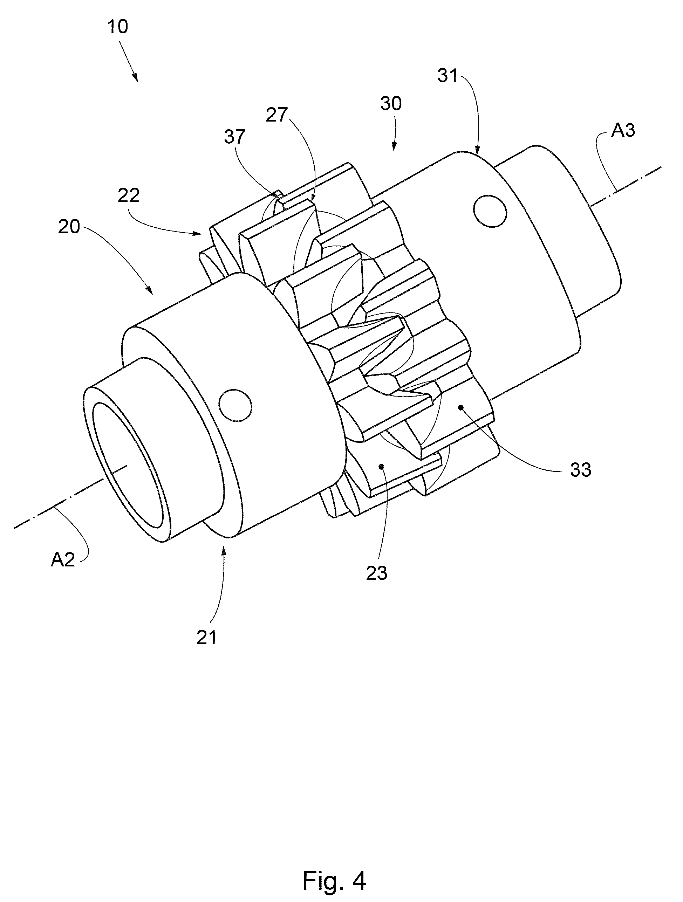

In den Figuren 3 und 4 sind die ersten und zweiten Kupplungshälften 20, 30 der Kupplung 10 in zwei unterschiedlichen perspektivischen Ansichten dargestellt, um Details der beiden Kupplungshälften 20, 30 noch besser ersichtlich zu machen.

Wie in den Figuren 3 und 4 gezeigt, weist die erste Kupplungshälfte 20 einen kreiszylindrischen Befestigungsabschnitt 21 und ein Zahnrad 22 auf, welches an ein Axialende des Befestigungsabschnitts 21 angeformt ist. Der Befestigungsabschnitt 21 weist eine radiale Passbohrung (nicht separat bezeichnet) auf, welche zu einer radialen Passbohrung (nicht separat bezeichnet) der einen Triebwelle 4 fluchtet. In die zueinander fluchtenden Passbohrungen ist ein Passstift (nicht gezeigt) eingesetzt, so dass die drehfeste Verbindung von erster Kupplungshälfte 20 und Triebwelle 4 erzielt ist.

In gleicher Weise weist die zweite Kupplungshälfte 30 einen kreiszylindrischen Befestigungsabschnitt 31 und ein Zahnrad 32 auf, welches an ein Axialende des Befestigungsabschnitts 31 angeformt ist. Der Befestigungsabschnitt 31 weist eine radiale Passbohrung (nicht separat bezeichnet) auf, welche zu einer radialen Passbohrung (nicht separat bezeichnet) der anderen Triebwelle 7 fluchtet. In die zueinander fluchtenden Passbohrungen ist ein Passstift (nicht gezeigt) eingesetzt, so dass die drehfeste Verbindung von zweiter Kupplungshälfte 30 und Triebwelle 7 erzielt ist.

Jeweilige Zähne 23, 33 der Zahnräder 22, 32 der ersten und zweiten Kupplungshälften 20, 30 sind als umfängliche Eingriffselemente so geformt, dass sie sowohl einen stirnseitigen als auch einen planseitigen Zahneingriff der Zahnräder 22, 32 der ersten und zweiten Kupplungshälften 20, 30 ermöglichen bzw. sicherstellen.

Somit sind die ersten und zweiten Kupplungshälften 20, 30 jeweils so eingerichtet, dass im gesamten Schwenkbereich (von hier z.B. 180 Grad) die Zähne 23 der ersten Kupplungshälfte 20 drehmomentübertragungsfähig in jeweilige Zwischenräume zwischen den Zähnen 33 der zweiten Kupplungshälfte 30 eingreifen. Dadurch wird im gesamten Schwenkbereich eine permanente rotative Antriebsverbindung der beiden Triebwellen 4, 7 über die Kupplung 10 gewährleistet.

Gemäß der dargestellten Ausführungsform der Erfindung sind die ersten und zweiten Kupplungshälften 20, 30, insbesondere deren jeweilige Zahnräder 22, 32 zueinander identisch ausgebildet.

Genauer weisen bei den ersten und zweiten Kupplungshälften 20, 30 die Zähne 23, 33 der Zahnräder 22, 32 jeweils einen bevorzugt evolventenförmigen stirnseitigen Zahnabschnitt 24, 34, der von einer umfänglichen Stirnseite des Zahnrades 22, 32 radial vorsteht, und einen bevorzugt keilförmigen planseitigen Zahnabschnitt 27, 37 auf, der von einer axialgerichteten Planseite des Zahnrades 22, 32 axial vorsteht.

Bei jedem Zahn 23, 33 der jeweiligen Zahnräder 22, 32 der ersten und zweiten Kupplungshälften 20, 30 geht der planseitige Zahnabschnitt 27, 37 bogenförmig, d.h. in einem Bogen 26 bzw. 36, der sich von einem radial äußersten Ende des planseitigen Zahnabschnitts 27 bis zu einem radial innersten Ende (d.h. einem Fußkreisdurchmesser bzw. der umfänglichen Stirnseite) des zugehörigen stirnseitigen Zahnabschnitts 24, 34 erstreckt, unterbrechungsfrei in den stirnseitigen Zahnabschnitt 24, 34 über.

Allgemein ausgedrückt ist an jeder der beiden Kupplungshälften 20, 30 eine Hirth-Verzahnung als planseitige Verzahnung mit einer stirnseitigen Verzahnung bevorzugt in Evolventenform kombiniert, wobei die planseitige Verzahnung und die stirnseitige Verzahnung unterbrechungsfrei bogenförmig ineinander übergehen.

Außerdem sind bei beiden von den ersten und zweiten Kupplungshälften 20, 30 die Zähne 23, 33 der jeweiligen Zahnräder 22, 32 jeweils so geformt, dass sich ein axiales Vorstehmaß des planseitigen Zahnabschnitts 27, 37 jedes Zahns 23, 33 vom radial äußersten Ende zu einem radial innersten Ende des planseitigen Zahnabschnitts 27, 37 hin vermindert, so dass die planseitigen Zahnabschnitte 27, 37 eine zur Planseite hin konisch zulaufende Verzahnung bilden.

Durch die oben beschriebene Konfiguration der ersten und zweiten Kupplungshälften 20, 30 der Kupplung 10 stehen in einer Arbeitseingriffssituation in der in den Figuren 1, 3 und 4 gezeigten Arbeitsstellung die jeweiligen planseitigen Zahnabschnitte 27, 37 der Zähne 23, 33 der Zahnräder 22, 32 miteinander in drehmomentübertragungsfähigem Zahneingriff. In der in Fig. 2 gezeigten Transportstellung stehen dahingegen in einer Transporteingriffssituation die jeweiligen stirnseitigen Zahnabschnitte 24, 34 der Zähne 23, 33 der Zahnräder 22, 32 miteinander in drehmomentübertragungsfähigem Zahneingriff.

Durch den unterbrechungsfreien Übergang der planseitigen Zahnabschnitte 27, 37 der Zähne 23, 33 der Zahnräder 22, 32 in die stirnseitigen Zahnabschnitte 24, 34 der Zähne 23, 33 der Zahnräder 22, 32 wird beim Verschwenken von der Arbeitsstellung in die Transportstellung und umgekehrt ein allmählicher Übergang von der Arbeitseingriffssituation in die Transporteingriffssituation und umgekehrt realisiert. Damit wird im gesamten Schwenkbereich eine permanente rotative Antriebsverbindung der beiden Triebwellen 4, 7 über die Kupplung 10 gewährleistet.

### Bezugszeichenliste

- 1: Arbeitsgerät
- 2: Ausleger
- 3: Auslegersegment
- 4: Triebwelle
- 4.1: Längsende
- 6: Auslegersegment
- 7: Triebwelle
- 7.1: Längsende
- 10: Kupplung
- 20: erste Kupplungshälfte
- 21: Befestigungsabschnitt
- 22: Zahnrad
- 23: Zahn
- 24: stirnseitiger Zahnabschnitt
- 26: Bogen
- 27: planseitiger Zahnabschnitt
- 30: zweite Kupplungshälfte
- 31: Befestigungsabschnitt
- 32: Zahnrad
- 33: Zahn
- 34: stirnseitiger Zahnabschnitt
- 36: Bogen
- 37: planseitiger Zahnabschnitt
- A1: Schwenkachse
- A2: Rotationsachse
- A3: Rotationsachse
- G1: Schwenkgelenk
- X1: axialer Abstand
- X2: radialer Abstand

## Patentansprüche

1. Kupplung (10) zur permanenten Antriebsverbindung zweier Triebwellen (4, 7), welche mit jeweiligen Längsenden (4.1, 7.1) aneinander angrenzen und welche an diesen Längsenden (4.1, 7.1) um eine Schwenkachse (A1) in einem vorbestimmten Schwenkbereich gegeneinander verschwenkbar sind, aufweisend:
eine erste Kupplungshälfte (20) zur drehfesten Anordnung am Längsende (4.1) einer Triebwelle (4) der beiden Triebwellen (4, 7), und
eine zweite Kupplungshälfte (30) zur drehfesten Anordnung am Längsende (7.1) der anderen Triebwelle (7) der beiden Triebwellen (4, 7),
wobei die ersten und zweiten Kupplungshälften (20, 30) jeweils eingerichtet sind, so dass im gesamten Schwenkbereich umfängliche Eingriffselemente der ersten Kupplungshälfte (20) drehmomentübertragungsfähig in jeweilige Zwischenräume zwischen umfänglichen Eingriffselementen der zweiten Kupplungshälfte (30) eingreifen können,
**dadurch gekennzeichnet, dass** die ersten und zweiten Kupplungshälften (20, 30) jeweils mit einem Zahnrad (22, 32) gebildet sind, wobei jeweilige Zähne (23, 33) der Zahnräder (22, 32) als Eingriffselemente so geformt sind, dass sie sowohl einen stirnseitigen als auch einen planseitigen Zahneingriff der Zahnräder (22, 32) der ersten und zweiten Kupplungshälften (20, 30) ermöglichen.

2. Kupplung (10) gemäß Anspruch 1, wobei bei den ersten und zweiten Kupplungshälften (20, 30) die Zähne (23, 33) der Zahnräder (22, 32) jeweils einen stirnseitigen Zahnabschnitt (24, 34), der von einer umfänglichen Stirnseite des Zahnrades (22, 32) radial vorsteht, und einen planseitigen Zahnabschnitt (27, 37) aufweisen, der von einer axialgerichteten Planseite des Zahnrades (22, 32) axial vorsteht.

3. Kupplung (10) gemäß Anspruch 2, wobei der planseitige Zahnabschnitt (27, 37) unterbrechungsfrei bogenförmig in den stirnseitigen Zahnabschnitt (24, 34) übergeht.

4. Kupplung (10) gemäß Anspruch 2 oder 3, wobei sich bei mindestens einer von den ersten und zweiten Kupplungshälften (20, 30) ein axiales Vorstehmaß des planseitigen Zahnabschnitts (27, 37) jedes Zahns (23, 33) von einem radial äußersten Ende zu einem radial innersten Ende des planseitigen Zahnabschnitts (27, 37) hin vermindert, so dass die planseitigen Zahnabschnitte (27, 37) eine zur Planseite hin konisch zulaufende Verzahnung bilden.

5. Kupplung (10) gemäß Anspruch 4, wobei der planseitige Zahnabschnitt (27, 37) in einem Bogen (26, 36), der sich vom radial äußersten Ende des planseitigen Zahnabschnitts (27, 37) bis zu einem radial innersten Ende des zugehörigen stirnseitigen Zahnabschnitts (24, 34) erstreckt, unterbrechungsfrei in den stirnseitigen Zahnabschnitt (24, 34) übergeht.

6. Kupplung (10) gemäß einem der Ansprüche 1 bis 5, wobei die Zahnräder (22, 32) der ersten und zweiten Kupplungshälften (20, 30) zueinander identisch ausgebildet sind.

7. Landwirtschaftliches Arbeitsgerät (1) mit:
mindestens einem Ausleger (2), welcher mindestens zwei längliche Auslegersegmente (3, 6) aufweist, die über ein Schwenkgelenk (G1) miteinander verbunden sind und entlang derer sich jeweils längs eine Triebwelle (4, 7) erstreckt, so dass die beiden Triebwellen (4, 7) mit jeweiligen Längsenden (4.1, 7.1) dieser am Schwenkgelenk (G1) aneinander angrenzen,
wobei die Auslegersegmente (3, 6) um eine durch das Schwenkgelenk (G1) definierte Schwenkachse (A1) gegeneinander verschwenkbar sind in einem vorbestimmten Schwenkbereich von einer Arbeitsstellung, in welcher die beiden Triebwellen (4, 7) koaxial aneinandergereiht sind, bis zu einer Transportstellung, in welcher jeweilige Rotationsachsen (A2, A3) der beiden Triebwellen (4, 7) auseinanderfallen, und
einer Kupplung (10) mit einer ersten Kupplungshälfte (20), welche drehfest am schwenkgelenkseitigen Längsende (4.1) einer Triebwelle (4) der beiden Triebwellen (4, 7) angeordnet ist, und einer zweiten Kupplungshälfte (30), welche drehfest am schwenkgelenkseitigen Längsende (7.1) der anderen Triebwelle (7) der beiden Triebwellen (4, 7) angeordnet ist,
wobei die ersten und zweiten Kupplungshälften (20, 30) jeweils eingerichtet sind, so dass im gesamten Schwenkbereich umfängliche Eingriffselemente der ersten Kupplungshälfte (20) drehmomentübertragungsfähig in jeweilige Zwischenräume zwischen umfänglichen Eingriffselementen (30) der zweiten Kupplungshälfte eingreifen,
**dadurch gekennzeichnet, dass** die ersten und zweiten Kupplungshälften (20, 30) jeweils mit einem Zahnrad (22, 32) gebildet sind, wobei jeweilige Zähne (23, 33) der Zahnräder (22, 32) als Eingriffselemente so geformt sind, dass sie sowohl einen stirnseitigen als auch einen planseitigen Zahneingriff der Zahnräder (22, 33) der ersten und zweiten Kupplungshälften (20, 30) ermöglichen.

8. Landwirtschaftliches Arbeitsgerät (1) gemäß Anspruch 7, wobei bei den ersten und zweiten Kupplungshälften (20, 30) die Zähne (23, 33) der Zahnräder (22, 32) jeweils einen stirnseitigen Zahnabschnitt (24, 34), der von einer umfänglichen Stirnseite des Zahnrades (22, 32) radial vorsteht, und einen planseitigen Zahnabschnitt (27, 37) aufweisen, der von einer axialgerichteten Planseite des Zahnrades (22, 32) axial vorsteht.

9. Landwirtschaftliches Arbeitsgerät (1) gemäß Anspruch 8, wobei sich bei mindestens einer von den ersten und zweiten Kupplungshälften (20 ,30) ein axiales Vorstehmaß des planseitigen Zahnabschnitts (27, 37) jedes Zahns (23, 33) von einem radial äußersten Ende zu einem radial innersten Ende des planseitigen Zahnabschnitts (27, 37) hin vermindert, so dass die planseitigen Zahnabschnitte (27, 37) eine zur Planseite hin konisch zulaufende Verzahnung bilden.

10. Landwirtschaftliches Arbeitsgerät (1) gemäß Anspruch 9, wobei der planseitige Zahnabschnitt (27, 37) in einem Bogen (26, 36), der sich vom radial äußersten Ende des planseitigen Zahnabschnitts (27, 37) bis zu einem radial innersten Ende des zugehörigen stirnseitigen Zahnabschnitts (24, 34) erstreckt, unterbrechungsfrei in den stirnseitigen Zahnabschnitt (24, 34) übergeht.
